# EUROPEAN PATENT SPECIFICATION

(11) **EP 0 500 128 B1**
(45) Date of publication and mention of the grant of the patent: **10.06.1998**
(21) Application number: 92102965.8
(22) Date of filing: 21.02.1992
(51) Int. Cl.: C08J 5/18, C08G 64/06, C08J 3/11, C08G 64/08

(54) **Polycarbonate resin solution for film formation by casting**
Polycarbonatharzlösung zur Herstellung von gegossenen Folien
Solution de polycarbonate pour la préparation des film coulés

(30) Priority: 22.02.1991 JP 48615/91; 22.02.1991 JP 48617/91
(43) Date of publication of application: 26.08.1992
(73) Proprietor: MITSUBISHI GAS CHEMICAL COMPANY, INC., Chiyoda-ku, Tokyo (JP)
(72) Inventor: Kanayama, Satoshi, c/o Mitsubishi Gas Chemical, Toyonaka-shi, Osaka (JP); Ogawa, Noriyoshi, c/o Mitsubishi Gas Chemical, Toyonaka-shi, Osaka (JP); Kawahigashi, Teruo, c/o Mitsubishi Gas Chemical, Toyonaka-shi, Osaka (JP); Okigawa, Toshio, c/o Mitsubishi Gas Chemical, Toyonaka-shi, Osaka (JP)
(74) Representative: Hansen, Bernd, Dr. Dipl.-Chem.

(56) References cited:
- EP-A- 0 084 578
- EP-A- 0 141 310
- EP-A- 0 380 028
- EP-A- 0 402 689
- DD-A- 59 169
- DE-A- 1 570 703
- DE-A- 2 701 173

## Description

### FIELD OF THE INVENTION

The present invention relates to the use of a polycarbonate resin solution in film formation by casting. More particularly, this invention relates to the use of a polycarbonate resin solution having excellent suitability for film formation by casting due to the polycarbonate resin having a specific structure, and also relates to a process for producing the polycarbonate resin solution.

### BACKGROUND OF THE INVENTION

It is well known that in the cast-film process, a film is produced by casting a resin solution onto the surface of a drum or belt to form a wet film on the surface and removing the solvent from the wet film by hot-air drying, and that a roll, plate, or other various parts are dipped into a resin solution to coat or line the surface. However, polycarbonate resin solutions for such uses generally begin to become milky in 3 to 4 days when allowed to stand. It has therefore been necessary to use polycarbonate resin solutions having low resin concentrations or to redissolve the precipitate or otherwise treat the milky resin solution before use, resulting in a disadvantage of poor production efficiency in film formation by casting. Furthermore, films obtained from conventional polycarbonate resin solutions have been unsatisfactory in, for example, that their mechanical strength is so low that they tend to develop stress cracks.

DE-A-2701173 relates to the use of thermoplastic aromatic polycarbonates having relative viscosities of 1.20 to 1.60. These polycarbonates involve 15 to 100 mol.% of structure units of the following formula I 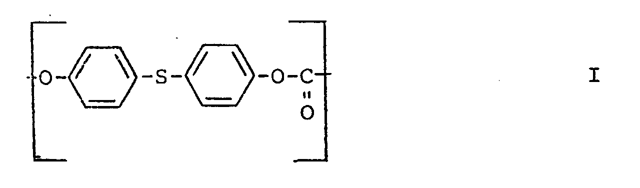 and 85 to 0 mol.% of structure units of the formula II 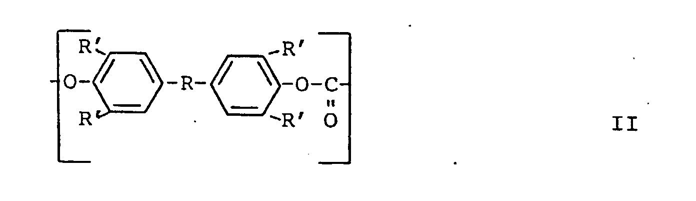 wherein R has the meanings isopropylidene, methylene, cyclohexylidene or diphenylcarbon and R' means hydrogen, methyl or bromine. The methylene chloride solution of these polymers may be used for film formation.

EP-A-0084578 discloses thiobisphenol-copolycarbonates having weight average molecular weights (Mw) between 18,000 and 22,000 and thio-bisphenoxy-carbonate units in amounts between 15 mole-% and 35 mole-%, referred to the total molar amount of bisphenoxy-carbonate units, characterized in that they consist of thiobisphenoxy-carbonate units of the following formula (I) 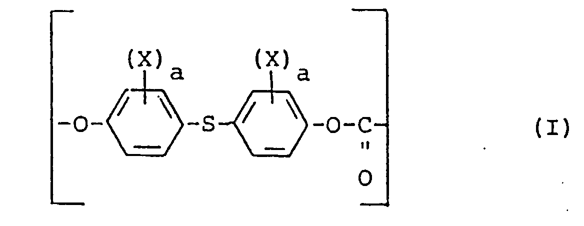 wherein X is H or C₁-C₄-alkyl and a is a number of zero to 2, and other diphenoxy-carbonate units of the following formula (II) 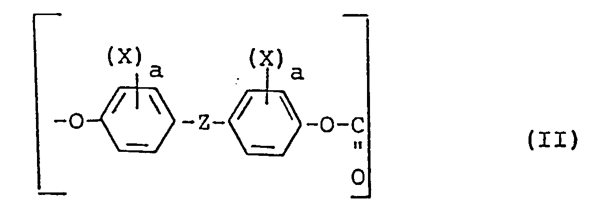 wherein X and a have the meaning of formula (I) and Z is a C₁-C₅-alkylene, C₂-C₅-alkylidene, cyclohexane or cyclohexylidene.

These polycarbonates are suitable for molding into shaped articles, test specimen, films etc.

EP-A-141 310 discloses the preparation of solutions of polycarbonates such as derived from bisphenol A and 0-5 wt.-% of bisphenol Z and the use thereof for film casting. Halogenated solvents such as methylenechloride and mixtures thereof with non-halogenated portions of e.g. toluene are disclosed.

### SUMMARY OF THE INVENTION

An object of the present invention is to overcome these problems by using a specific polycarbonate resin.

The present invention as disclosed in claims 1-6 relates to the use of a polycarbonate resin solution in film formation by casting which comprises an non-halogenated organic solvent and dissolved therein in a concentration of 1 - 30% by weight a random copolycarbonate resin having a structural unit represented by the following formula (1) and a structural unit represented by the following formula (2), with the molar ratio of the amount of the structural unit of formula (1) to that of the structural unit of formula (2) being from 35/65 to 65/35, and having a viscosity-average molecular weight of from 15,000 to 100,000: 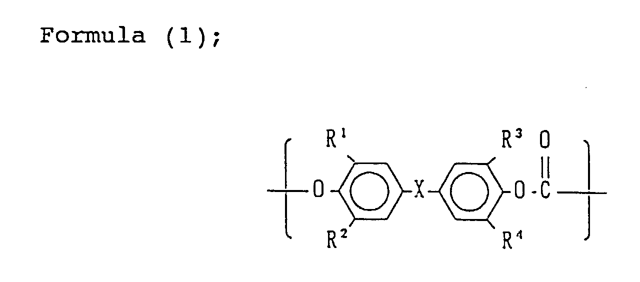 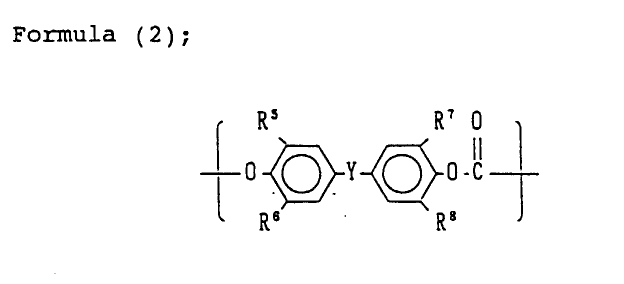 wherein R¹ to R⁸ each represents hydrogen atom, a halogen atom, or an alkyl group having from 1 to 4 carbon atoms, X represents a straight-chain, branched, or cyclic alkylidene group having from 1 to 10 carbon atoms, an aryl-substituted alkylidene group, an arylene group, or sulfonyl group, and Y represents oxygen atom or sulfur atom.

The present invention further provides a process for producing the above polycarbonate resin solution.

### DETAILED DESCRIPTION OF THE INVENTION

The polycarbonate resin used in the present invention can be obtained by copolymerizing dihydric phenols represented by the following formulae (3) and (4) with phosgene, a carbonic acid ester, or a chloroformate: 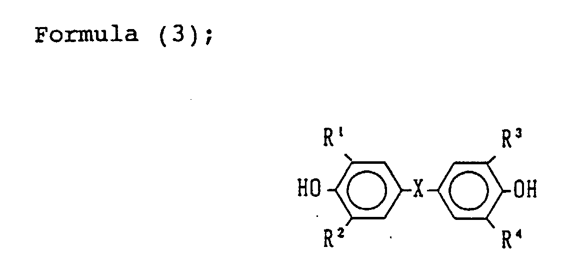 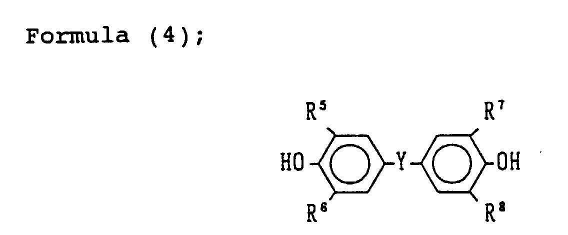 wherein R¹ to R⁸, X, and Y are the same as defined in formulae (1) and (2) described above. This polycarbonate resin has, in the molecule thereof, randomly distributed structural units respectively represented by the formulae (1) and (2) described above, and has a viscosity-average molecular weight of from 15,000 to 100,000, preferably from 20,000 to 40,000.

In the above copolymerization, the dihydric phenol of formula (3) and the dihydric phenol of formula (4) are reacted in amounts such that the molar ratio of the amount of (3) to that of (4) is in the range of from 35/65 to 65/35. If the molar ratio thereof is outside the range, solutions of the resulting polycarbonate resin may be turbid even just after preparation thereof or may have poor stability. Due to random copolymerization, the polycarbonate resin produced has a more uniform microscopical distribution as compared to block copolymers and, because of this, the polycarbonate resin is improved not only in optical properties such as solution stability, and the like, but also in stress cracking. If the polycarbonate resin has a viscosity-average molecular weight below 15,000, films obtained therefrom by casting have insufficient strength. On the other hand, molecular weights thereof exceeding 100,000 result in lowered efficiency in film production by casting.

Examples of the dihydric phenol compound represented by formula (3) used as a raw material for producing the copolycarbonate resin of the present invention include bis(4-hydroxyphenyl)methane, 1,1-bis(4-hydroxyphenyl)ethane, 2,2-bis(4-hydroxyphenyl)propane (=bisphenol A; BPA), 2,2-bis(4-hydroxyphenyl)butane, 1,1-bis(4-hydroxyphenyl)cyclohexane (=bisphenol Z; BPZ), 2,2-bis(4-hydroxy-3,5-dimethylphenyl)propane, 2,2-bis(4-hydroxy-3,5-dibromophenyl)propane, 2,2-bis(4-hydroxy-3,5-dichlorophenyl)propane, 2,2-bis(4-hydroxy-3-methylphenyl)propane (=dimethylbisphenol A; DMBPA), 2,2-bis(4-hydroxy-3-bromophenyl)propane, 2,2-bis(4-hydroxy-3-chlorophenyl)propane, 1,1-bis(4-hydroxyphenyl)-1-phenylethane, bis(4-hydroxyphenyl)diphenylmethane, bis(4-hydroxyphenyl)sulfone, and the like. Preferred of these are 2,2-bis(4-hydroxyphenyl)propane, 1,1-bis(4-hydroxyphenyl)cyclohexane, 1,1-bis(4-hydroxyphenyl)-1-phenylethane, 2,2-bis(4-hydroxy-3-methylphenyl)propane, and bis(4-hydroxyphenyl)sulfone. From the standpoint of thermal stability, 2,2-bis(4-hydroxyphenyl)propane and 1,1-bis(4-hydroxyphenyl)cyclohexane are particularly preferred.

Examples of the dihydric phenol compound of formula (4) used as another raw material for producing the copolycarbonate resin of the present invention include bis(4-hydroxyphenyl) ether (=4,4-dihydroxydiphenyl ether; DHPE), bis(3-methyl-4-hydroxyphenyl) ether (=3,3'-dimethyl-4,4'-dihydroxydiphenyl ether; DMDHPE), bis(3-bromo-4-hydroxyphenyl) ether, bis(3-chloro-4-hydroxyphenyl) ether, bis(3,5-dimethyl-4-hydroxyphenyl) ether, bis(3,5-dibromo-4-hydroxyphenyl) ether, bis(3,5-dichloro-4-hydroxyphenyl) ether, bis(4-hydroxyphenyl)sulfide (TDP), bis(3-methyl-4-hydroxyphenyl)sulfide (DMTDP), bis(3-bromo-4-hydroxyphenyl)sulfide, bis(3-chloro-4-hydroxyphenyl)sulfide, bis(3,5-dimethyl-4-hydroxyphenyl)sulfide, bis(3,5-dibromo-4-hydroxyphenyl)sulfide, bis(3,5-dichloro-4-hydroxyphenyl) sulfide, and the like. Of these, bis(4-hydroxyphenyl) ether and bis(4-hydroxyphenyl) sulfide are preferred.

For the copolymerization, a chain terminator or molecular weight modifier is usually used, which can be a compound having one phenolic hydroxyl group. Besides ordinarily employed phenol, p-tert-butylphenol, tribromophenol, and the like, examples of the chain terminator or molecular weight modifier include (long-chain alkyl)phenols, aliphatic or aromatic carbonyl chlorides, aliphatic or aromatic carboxylic acids, hydroxybenzoic acid esters, hydroxyphenylalkyl acid esters, alkoxyphenols, and the like. The amount of the chain terminator or molecular weight modifier used is from 100 to 0.5 mol, preferably from 50 to 2 mol, per 100 mol of all the dihydric phenol compounds used. It is, of course, possible to use two or more such compounds in combination as the chain terminator or molecular weight modifier.

A branching agent can also be used in an amount of from 0.01 to 3 mol, preferably from 0.1 to 1.0 mol, per 100 mol of all the dihydric phenol compounds used, to produce a branched polycarbonate. Examples of the branching agent include polyhydroxy compounds such as phloroglucin, 2,6-dimethyl-2,4,6-tris(4-hydroxyphenyl)heptene-3, 4,6-dimethyl-2,4,6-tris(4-hydroxyphenyl)heptene-2, 1,3,5-tris(2-hydroxyphenyl)benzole, 1,1,1-tris(4-hydroxyphenyl)ethane, 2,6-bis(2-hydroxy-5-methylbenzyl)-4-methylphenol, and α,α",α"-tris(4 -hydroxyphenyl)-1,3,5-triisopropylbenzene and other compounds including 3,3-bis(4-hydroxyaryl)oxindole (=isatinbisphenol), 5-chloroisatin, 5,7-dichloroisatin, 5-bromoisatin, and the like.

If required and necessary, various kinds of known additives or ingredients for use with conventional polycarbonate resins can be added to the polycarbonate resin used in the present invention. For example, a reinforcement, filler, stabilizer, ultraviolet absorber, antistatic agent, lubricant, release agent, dye, pigment, flame retardant, and other additives, an elastomer for improving impact resistance, and the like can be added. Particularly preferred examples of the stabilizer are phosphorous acid and phosphites. Examples of the release agent include esters of saturated aliphatic acids with mono- or polyhydric alcohols. Preferred of these are stearyl stearate, behenyl behenate, pentaerythritol tetrastearate, dipentaerythritol hexaoctoate, and the like. Examples of the filler and reinforcement include organic or inorganic materials such as glass powder, glass beads, synthetic or fluorinated mica, zinc oxide, carbon fibers, glass fibers particularly those containing fibers with diameters of 2 µm or less, zinc oxide whiskers, stainless-steel fibers, Kevlar fibers, and the like. Examples of the elastomer include methyl methacrylate-butadiene-styrene copolymer (MBS), methyl methacrylate-acrylonitrile-butadiene-styrene copolymer (MABS), methyl methacrylate-acrylonitrile-styrene copolymer (MAS), and others. Further, an ordinary polycarbonate, a polyester carbonate, a polyarylate, or a similar resin can of course be suitably used according to the use of final films obtained.

The solvent for use in preparing the polycarbonate resin solution of the present invention, is a non-halogenated solvent. Particularly a hydrocarbon-type solvent such as toluene, xylene, ethylbenzene, or the like, is preferred. The polycarbonate resin concentration in the solution is from 1 to 30% by weight, preferably from 5 to 20% by weight. Unlike ordinary polycarbonate resins, the polycarbonate resin used in the present invention has an advantage that it shows high solubility in non-halogenated solvents, e.g., toluene, and its solutions are highly stable.

As described above, the polycarbonate resin solution as used according to the present invention can diminish the safety and hygienic problems associated with conventional cast-film processes, because the solution used according to the present invention in film formation by casting is a solution in a non-halogenated solvent due to the specific polycarbonate resin used therein which has high solubility in non-halogenated solvents. Further, since the polycarbonate resin solution shows excellent stability in the solution state, use of the solution in film formation by casting brings about improved film production efficiency. Moreover, the films obtained from the solution of the present invention have an advantage that they have excellent strength with good resistance to stress cracking and also have high surface strength.

The present invention will be explained below in more detail by reference to the following examples.

### EXAMPLE 1

In 42 liters of water was dissolved 3.7 kg of sodium hydroxide. While the temperature of this solution was kept at 20°C, 3.65 kg of bisphenol A (BPA), 3.23 kg of 4,4'-dihydroxydiphenyl ether (DHPE), and 8 g of hydrosulfite (HD) were dissolved therein.

To the resulting solution was added 28 liters of methylene chloride (MC), followed by addition of 148 g of p-t-butylphenol (PTBP) with stirring. Subsequently, 3.5 kg of phosgene (PG) was blown into the mixture over a period of 60 minutes. After completion of the phosgene blowing, the reaction mixture was vigorously stirred to emulsify it, and 8 g of triethylamine (TEA) was then added thereto. The resulting mixture was stirred for about 1 hour to proceed polymeriazation.

After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form. Properties of this polycarbonate resin were evaluated, and the results obtained are shown in Table 1.

### COMPARATIVE EXAMPLE 1

A polycarbonate resin was obtained and evaluated in the same manner as in Example 1 except that 7.3 kg of BPA was used in place of 3.65 kg of BPA and 3.23 kg of DHPE. The results obtained are shown in Table 1.

### COMPARATIVE EXAMPLE 2

(1) Production of Polycarbonate Oligomer:
In 1.8 liters of water was dissolved 1.6 kg of sodium hydroxide. While the temperature of this solution was kept at 20°C, 3.65 kg of BPA and 4 g of HD were dissolved therein. To the resulting solution was added 14 liters of MC, followed by addition of 64 g of PTBP with stirring. Subsequently, 2.4 kg of PG was blown into the mixture over a period of 40 minutes. After completion of the PG blowing, only the MC solution containing a polycarbonate oligomer was collected. This oligomer solution in MC was analyzed, giving the following results.

| | |
|---|---|
| Oligomer concentration (note 1) | 29.4 wt% |
| Terminal Cl group content (note 2) | 6.5 wt% |
| Terminal phenolic OH group content (note 3) | 0.01 wt% |
| (Note 1) Determined by weighing the sample after evaporation to dryness. (Note 2) Determined by reacting the oligomer with aniline and subjecting the resulting aniline hydrochloride to neutralization titration with 0.2N aqueous NaOH solution. (Note 3) Determined by dissolving the oligomer in an acetic acid solution of titanium tetrachloride and measuring the resulting color development by colorimetry at 546 nm. | |

The above-obtained oligomer solution in MC is hereinafter referred to as "Oligomer Solution A".
(2) Production of Another Polycarbonate Oligomer:
An oligomer was produced in the same manner as in (1) above except that 3.23 kg of 4,4'-dihydroxydiphenyl ether (DHPE) was used in place of BPA. The thus-obtained oligomer solution in MC was analyzed, giving the following results.

| | |
|---|---|
| Oligomer concentration | 26.0 wt% |
| Terminal Cl group content | 7.0 wt% |
| Terminal phenolic OH group content | 0.01 wt% |

This oligomer solution is hereinafter referred to as "Oligomer Solution B".
(3) Production of Block Copolycarbonate:
Into a reactor were introduced the above-obtained Oligomer Solution A and Oligomer Solution B, 4 liters of MC, and 20 g of PTBP. Thereto was added a solution of 1.0 kg of NaOH and 18 liters of water. This reaction mixture was vigorously stirred to emulsify it, and 8 g of TEA was then added thereto. The resulting mixture was stirred for about 1 hour to proceed polymerization.
After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form.
Properties of this polycarbonate resin were evaluated, and the results obtained are shown in Table 1.

### EXAMPLES 2 TO 5 AND COMPARATIVE EXAMPLES 3 AND 4

Polycarbonate resins, the compositions of which are shown in Table 1, were obtained in the same manner as in Example 1 except that the kinds and amounts of the dihydric phenols of formulae (3) and (4) were changed as shown in Table 1.

Properties of the thus-obtained polycarbonate resins were evaluated, and the results obtained are shown in Table 1.

### EXAMPLE 6

In 42 liters of water was dissolved 3.7 kg of sodium hydroxide. While the temperature of this solution was kept at 20°C, 3.65 kg of bisphenol A (BPA), 3.49 kg of bis(4-hydroxyphenyl)sulfide (=4,4'-dihydroxydiphenyl sulfide; TDP), and 8 g of hydrosulfite (HD) were dissolved therein.

To the resulting solution was added 28 liters of methylene chloride (MC), followed by addition of 148 g of p-t-butylphenol (PTBP) with stirring. Subsequently, 3.5 kg of phosgene (PG) was blown into the mixture over a period of 60 minutes. After completion of the phosgene blowing, the reaction mixture was vigorously stirred to emulsify it, and 8 g of triethylamine (TEA) was then added thereto. The resulting mixture was stirred for about 1 hour to proceed polymerization.

After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form. Properties of this polycarbonate resin were evaluated, and the results obtained are shown in Table 2.

### COMPARATIVE EXAMPLE 5

(1) Production of Polycarbonate Oligomer:
In 1.8 liters of water was dissolved 1.6 kg of sodium hydroxide. While the temperature of this solution was kept at 20°C, 3.65 kg of BPA and 4 g of HD were dissolved therein. To the resulting solution was added 14 liters of MC, followed by addition of 64 g of PTBP with stirring. Subsequently, 2.4 kg of PG was blown into the mixture over a period of 40 minutes. After completion of the PG blowing, only the MC solution containing a polycarbonate oligomer was collected. This oligomer solution in MC was analyzed, giving the following results.

| | |
|---|---|
| Oligomer concentration (note 1) | 29.4 wt% |
| Terminal Cl group content (note 2) | 7.0 wt% |
| Terminal phenolic OH group content (note 3) | 0.01 wt% |
| (Note 1) Determined by weighing the sample after evaporation to dryness. (Note 2) Determined by reacting the oligomer with aniline and subjecting the resulting aniline hydrochloride to neutralization titration with 0.2N aqueous NaOH solution. (Note 3) Determined by dissolving the oligomer in an acetic acid solution of titanium tetrachloride and measuring the resulting color development by colorimetry at 546 nm. | |

The above-obtained oligomer solution in MC is hereinafter referred to as "Oligomer Solution C".
(2) Production of Another Polycarbonate Oligomer:
An oligomer was produced in the same manner as in (1) above except that 3.49 kg of 4,4'-dihydroxydiphenyl sulfide (TDP) was used in place of BPA. The thus-obtained oligomer solution in MC was analyzed, giving the following results.

| | |
|---|---|
| Oligomer concentration | 26.0 wt% |
| Terminal Cl group content | 7.0 wt% |
| Terminal phenolic OH group content | 0.01 wt% |

This oligomer solution is referred hereinafter to as "Oligomer Solution D".
(3) Production of Block Copolycarbonate:
Into a reactor were introduced the above-obtained Oligomer Solution C and Oligomer Solution D, 4 liters of MC, and 20 g of PTBP. Thereto was added a solution of 1.0 kg of NaOH and 18 liters of water. This reaction mixture was vigorously stirred to emulsify it, and 8 g of TEA was then added thereto. The resulting mixture was stirred for about 1 hour to proceed polymerization.
After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form.
Properties of this polycarbonate resin were evaluated, and the results obtained are shown in Table 2.

### EXAMPLES 7 TO 10 AND COMPARATIVE EXAMPLES 6 AND 7

Polycarbonate resins, the compositions of which are shown in Table 2, were obtained in the same manner as in Example 6 except that the kinds and amounts of the dihydric phenols of formulae (3) and (4) were changed.

Properties of the thus-obtained polycarbonate resins were evaluated, and the results obtained are shown in Table 2.

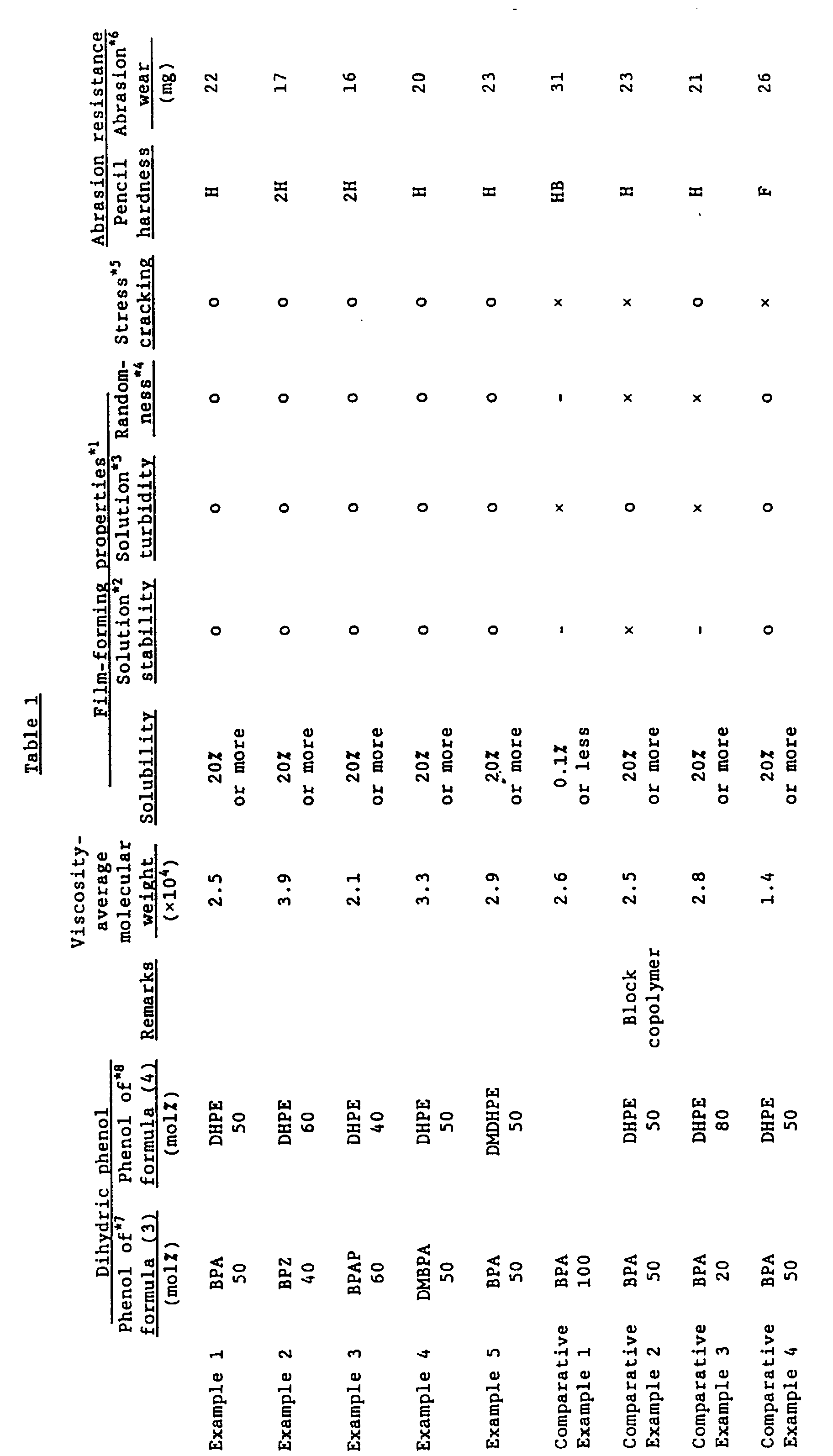

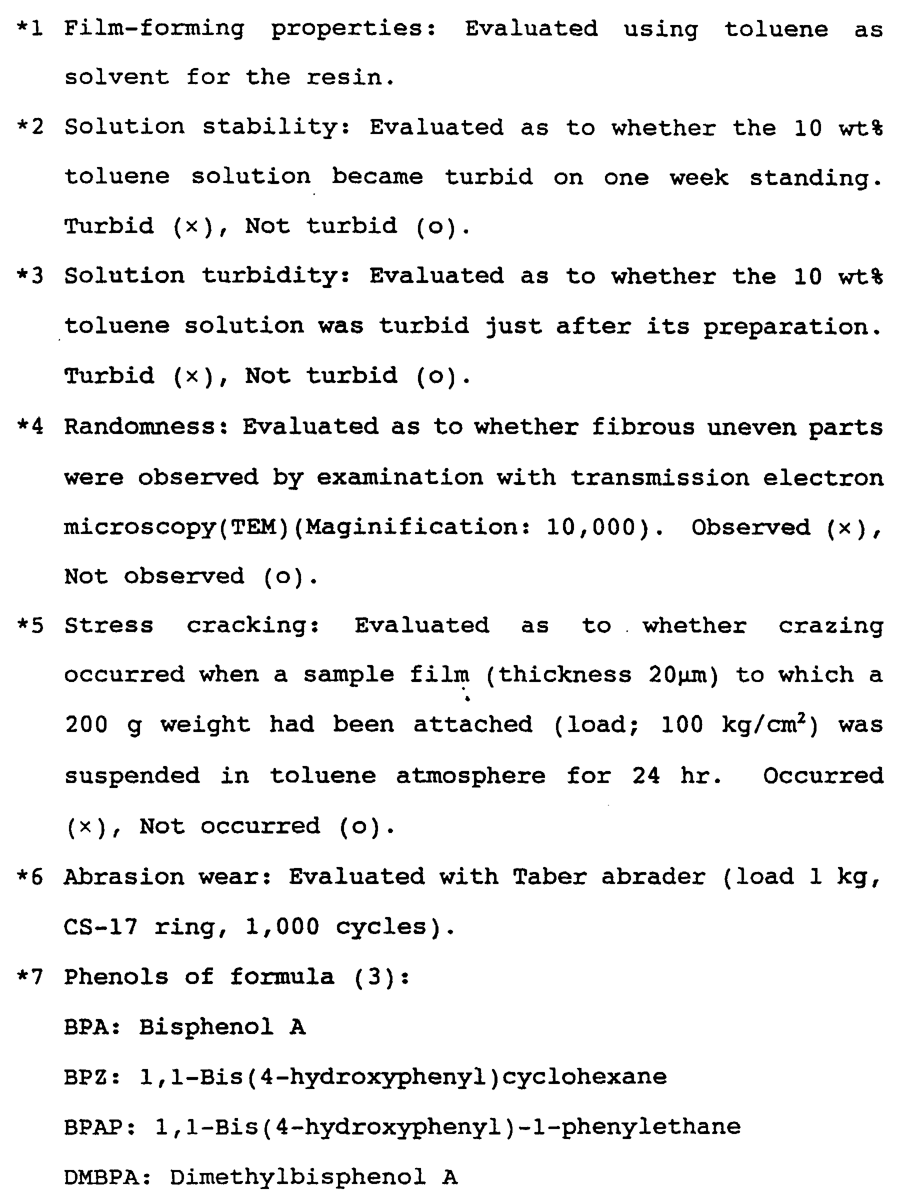

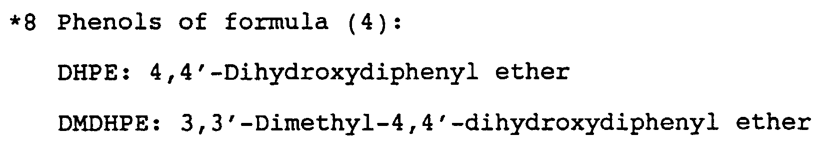

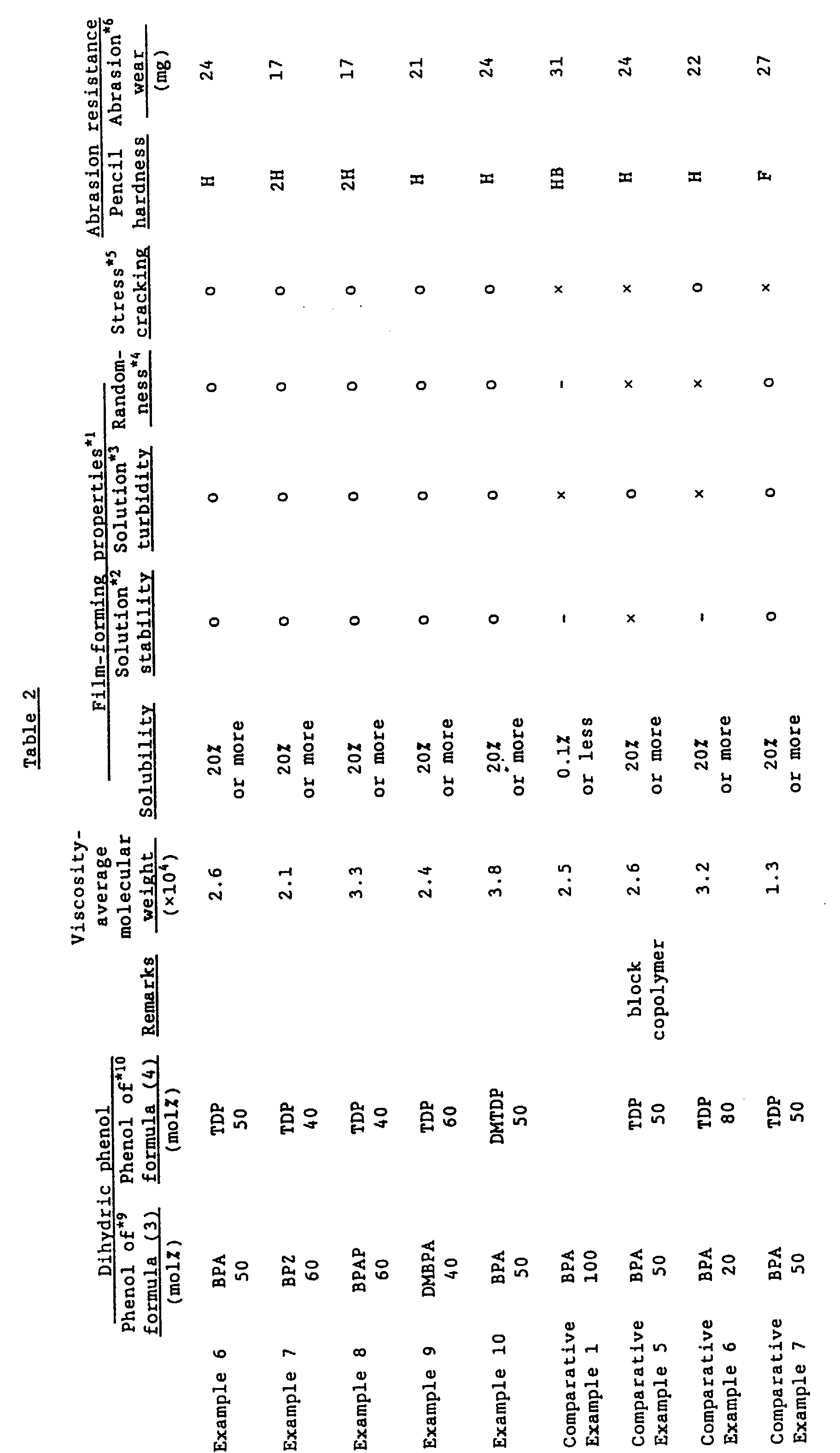

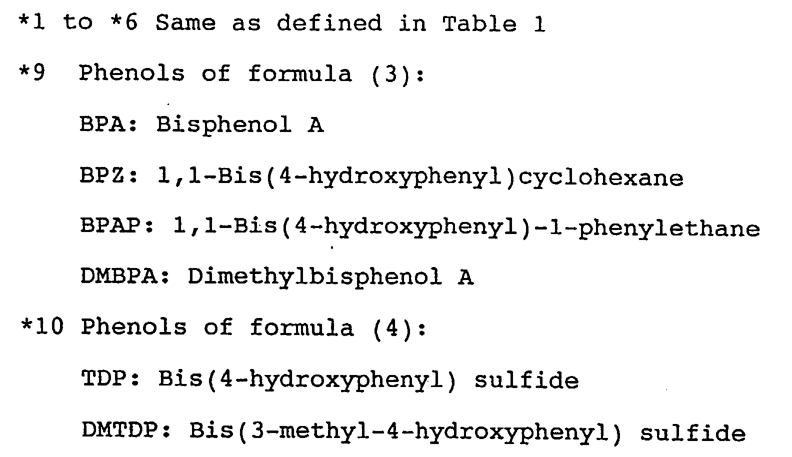

## Claims

1. Use of a polycarbonate resin solution in film formation by casting, whereby a random copolycarbonate resin is dissolved in a non-halogenated solvent in a concentration of 1 to 30% by weight, said copolycarbonate consisting of structural units represented by the following formula (1) and structural units represented by the following formula (2), and optionally units derived from chain terminators, molecular weight modifiers and/or branching agents and having a viscosity-average molecular weight of from 15,000 to 100,000: 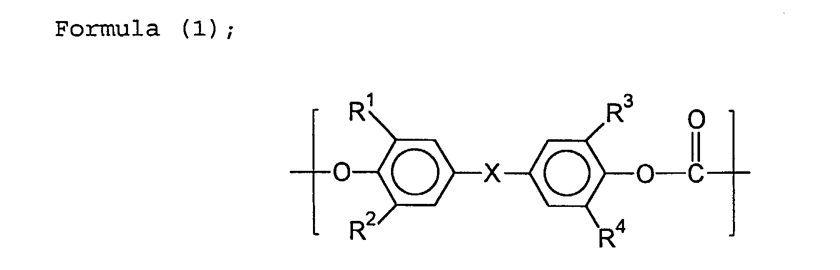 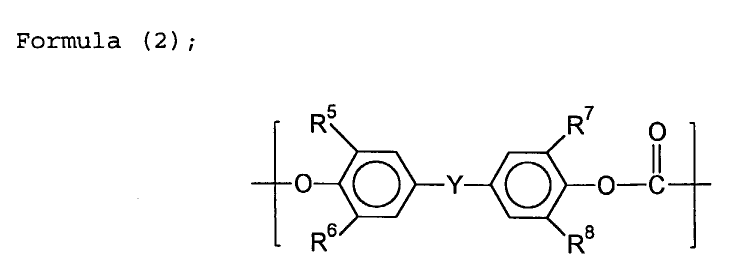 wherein R¹ to R⁸ each represents hydrogen atom, a halogen atom, or an alkyl group having from 1 to 4 carbon atoms, X represents a straight-chain, branched, or cyclic alkylidene group having from 1 to 10 carbon atoms, an aryl-substituted alkylidene group, an arylene group, or sulfonyl group, and Y represents oxygen atom or sulfur atom,
characterized in that the molar ratio of the structural unit of formula (1) to that of the structural unit of formula (2) is from 35/65 to 65/35.

2. Use as claimed in claim 1, wherein said structural unit represented by formula (1) is derived from a dihydric phenol selected from the group consisting of 2,2-bis(4-hydroxyphenyl)propane (= bisphenol A), 1,1-bis(4-hydroxyphenyl) cyclohexane, 1,1-bis(4-hydroxyphenyl)-1-phenylethane, 2,2-bis(3-methyl-4-hydroxyphenyl)propane, and bis(4-hydroxyphenyl) sulfone.

3. Use as claimed in claim 1, wherein said structural unit represented by formula (2) is derived from bis(4-hydroxyphenyl)ether or bis(3-methyl-4-hydroxyphenyl)ether.

4. Use as claimed in claim 1, wherein said structural unit represented by formula (2) is derived from bis(4-hydroxyphenyl)sulfide or bis(3-methyl-4-hydroxyphenyl)sulfide.

5. Use as claimed in claim 1, wherein the viscosity-average molecular weight of said random copolycarbonate resin is from 20,000 to 40,000.

6. A process for producing a solution of a polycarbonate resin being dissolved in a non-halogenated solvent which comprises the steps of
copolymerizing a dihydric phenol represented by the following formula (3), and a dihydric phenol represented by the following formula (4) with phosgene, a carbonic acid ester, or a chloroformate, thereby to produce a random copolycarbonate resin having a viscosity-average molecular weight of from 15,000 to 100,000: 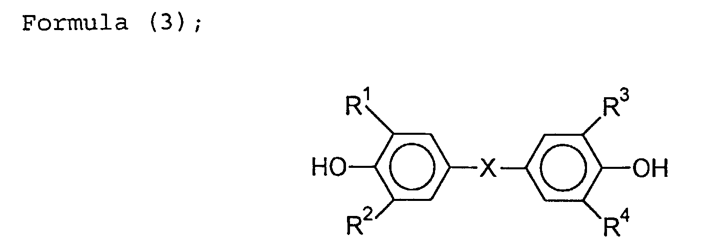 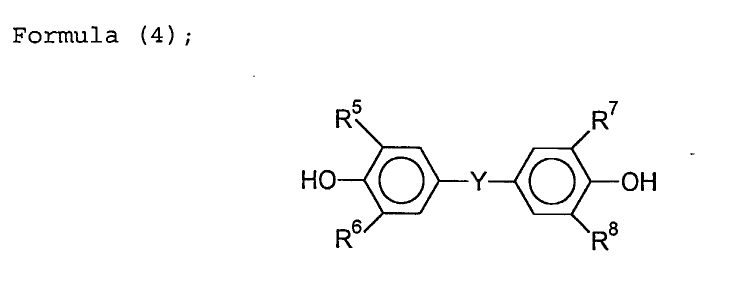 wherein R¹ to R⁸ each represents hydrogen atom, a halogen atom, or an alkyl group having from 1 to 4 carbon atoms, X represents a straight-chain, branched, or cyclic alkylidene group having from 1 to 10 carbon atoms, an aryl-substituted alkylidene group, an arylene group, or sulfonyl group, and Y represents oxygen atom or sulfur atom, and
dissolving the product obtained thereby in said non-halogenated solvent,
characterized in that the molar ratio of the amount of the dihydric phenol of formula (3) to that of the dihydric phenol of formula (4) is from 35/65 to 65/35.

## Patentansprüche

1. Verwendung einer Polycarbonat-Harzlösung zur Filmbildung durch Gießen, bei der ein statistisches Copolycarbonatharz in einer Konzentration von 1 bis 30 Gew.-% in einem nicht-halogenierten Lösungsmittel aufgelöst ist, wobei das Copolycarbonat aus Stuktureinheiten, die durch die folgende Formel (1) dargestellt werden, und Struktureinheiten, die durch die folgende Formel (2) dargestellt werden, und fakultativ Einheiten, die von Kettenabbruchagenzien, Regelsubstanzen für das Molekulargewicht und/oder Verzweigungsagenzien stammen, besteht und ein Viskositätsmittel des Molekulargewichts zwischen 15 000 und 100 000 hat: 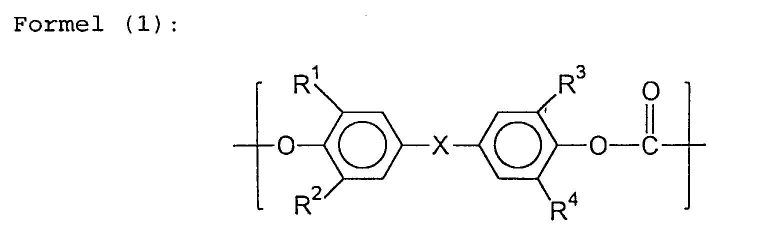 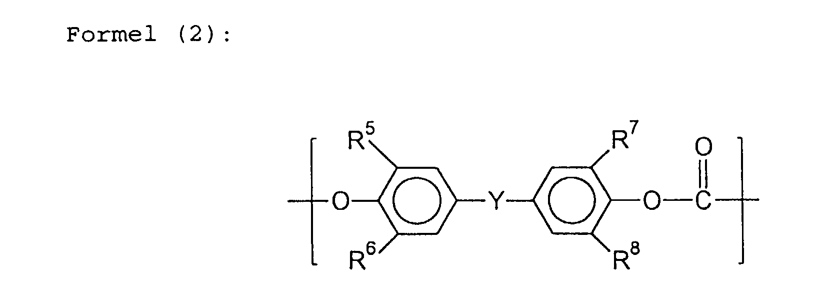 in denen R¹ bis R⁸ jeweils ein Wasserstoffatom, ein Halogenatom oder eine Alkyl-Gruppe, die 1 bis 4 Kohlenstoffatome hat, darstellen; X eine geradkettige, verzweigte oder cyclische Alkyliden-Gruppe, die 1 bis 10 Kohlenstoffatome hat, eine arylsubstituierte Alkyliden-Gruppe, eine Arylen-Gruppe oder Sulfonyl-Gruppe darstellt und Y ein Sauerstoffatom oder ein Schwefelatom darstellt;
dadurch **gekennzeichnet,** daß das Molverhältnis der Struktureinheit der Formel (1) zu der Struktureinheit der Formel (2) zwischen 35/65 und 65/35 liegt.

2. Verwendung nach Anspruch 1, wobei die Struktureinheit, die durch die Formel (1) dargestellt wird, von einem zweiwertigen Phenol stammt, das aus der aus 2,2-Bis(4-hydroxyphenyl)propan (= Bisphenol A), 1,1-Bis(4-hydroxyphenyl)cyclohexan, 1,1-Bis(4-hydroxyphenyl)-1-phenylethan, 2,2-Bis (3-methyl-4-hydroxyphenyl)propan und Bis(4-hydroxyphenyl)sulfon bestehenden Gruppe ausgewählt ist.

3. Verwendung nach Anspruch 1, wobei die Struktureinheit, die durch die Formel (2) dargestellt wird, von Bis(4-hydroxyphenyl)ether oder Bis(3-methyl-4-hydroxyphenyl)ether stammt.

4. Verwendung nach Anspruch 1, wobei die Struktureinheit, die durch die Formel (2) dargestellt wird, von Bis(4-hydroxyphenyl)sulfid oder Bis(3-methyl-4-hydroxyphenyl) sulfid stammt.

5. Verwendung nach Anspruch 1, wobei das Viskositätsmittel des Molekulargewichts für das statistische Copolymerharz zwischen 20 000 und 40 000 liegt.

6. Verfahren zur Herstellung einer Lösung eines Polycarbonatharzes, welches in einem nicht-halogenierten Lösungsmittel aufgelöst ist, das die folgenden Schritte umfaßt:
Copolymerisieren eines zweiwertigen Phenols, das durch die folgende Formel (3) dargestellt wird, und eines zweiwertigen Phenols, das durch die folgende Formel (4) dargestellt wird, mit Phosgen, einem Kohlensäureester oder einem Chlorformiat, um so ein statistisches Copolycarbonatharz herzustellen, das ein Viskositätsmittel des Molekulargewichts zwischen 15 000 und 100 000 hat: 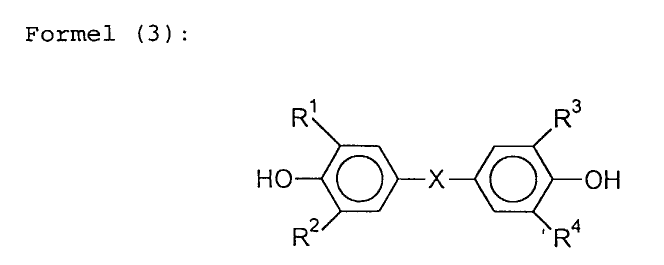 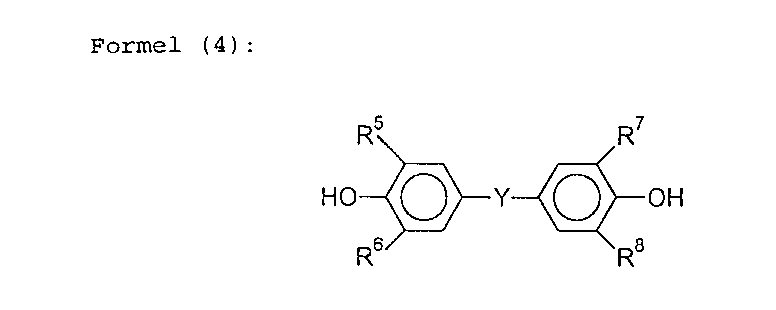 in denen R¹ bis R⁸ jeweils ein Wasserstoffatom, ein Halogenatom oder eine Alkyl-Gruppe, die 1 bis 4 Kohlenstoffatome hat, darstellen; X eine geradkettige, verzweigte oder cyclische Alkyliden-Gruppe, die 1 bis 10 Kohlenstoffatome hat, eine arylsubstituierte Alkyliden-Gruppe, eine Arylen-Gruppe oder Sulfonyl-Gruppe darstellt; und Y ein Sauerstoffatom oder Schwefelatom darstellt; und
Auflösen des dadurch erhaltenen Produktes in dem nicht-halogenierten Lösungsmittel,
dadurch **gekennzeichnet,** daß das Molverhältnis der Menge des zweiwertigen Phenols der Formel (3) zu der des zweiwertigen Phenols der Formel (4) zwischen 35/65 und 65/35 liegt.

## Revendications

1. Utilisation d'une solution de résine polycarbonate dans la formation de films coulés, solution dans laquelle une résine copolycarbonate statistique est dissoute dans un solvant non halogéné, à une concentration située entre 1 et 30 % en masse, ledit copolycarbonate comprenant des motifs structuraux représentés par la formule (1) suivante et des motifs structuraux représentés par la formule (2) suivante, et des motifs facultatifs dérivés d'agents de terminaison de chaînes, d'agents modifiant la masse moléculaire et/ou d'agents de ramification, et ayant une masse moléculaire moyenne en viscosité située entre 15 000 et 100 000 : 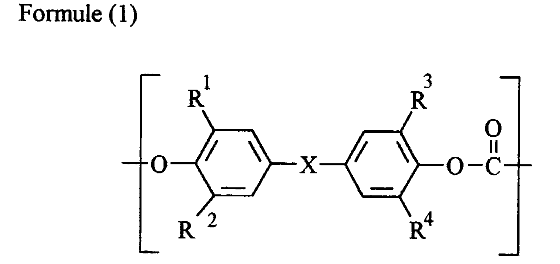 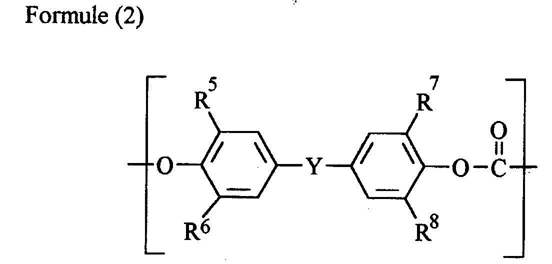 dans lesquelles chacun des R¹ à R⁸ représente l'atome d'hydrogène, un atome d'halogène ou un groupe alkyle contenant 1 à 4 atomes de carbone, X représente un groupe alkylidène à chaîne linéaire, ramifiée ou cyclique contenant 1 à 10 atomes de carbone, un groupe alkylidène substitué par aryle, un groupe arylène ou un groupe sulfonyle et Y représente l'atome d'oxygène ou l'atome de soufre,
caractérisée en ce que le rapport molaire du motif structural de formule (1) au motif structural de formule (2) est situé entre 35/65 et 65/35.

2. Utilisation selon la revendication 1, dans laquelle ledit motif structural représenté par la formule (1) est dérivé d'un phénol dihydroxylé choisi dans le groupe constitué par le 2,2-bis(4-hydroxyphényl)propane (=bisphénol A), le 1,1-bis(4-hydroxyphényl)cyclohexane, le 1,1-bis(4-hydroxyphényl)-1-phényléthane, le 2,2-bis(3-méthyl-4-hydroxyphényl)propane et la bis(4-hydroxyphényl)sulfone.

3. Utilisation selon la revendication 1, dans laquelle ledit motif structural représenté par la formule (2) est dérivé du bis(4-hydroxyphényl)éther ou du bis(3-méthyl-4-hydroxyphényl)éther.

4. Utilisation selon la revendication 1, dans laquelle ledit motif structural représenté par la formule (2) est dérivé du bis(4-hydroxyphényl)sulfure ou du bis(3-méthyl-4-hydroxyphényl)sulfure.

5. Utilisation selon la revendication 1, dans laquelle la masse moléculaire moyenne en viscosité de ladite résine copolycarbonate statistique se situe entre 20 000 et 40 000.

6. Procédé de production d'une solution de résine polycarbonate dissoute dans un solvant non halogéné, comprenant les étapes de
la copolymérisation d'un phénol dihydroxylé représenté par la formule (3) suivante et d'un phénol dihydroxylé représenté par la formule (4) suivante avec le phosgène, un ester d'acide carbonique ou un chloroformiate, avec ainsi production d'une résine copolycarbonate statistique ayant une masse moléculaire moyenne en viscosité située entre 15 000 et 100 000 : 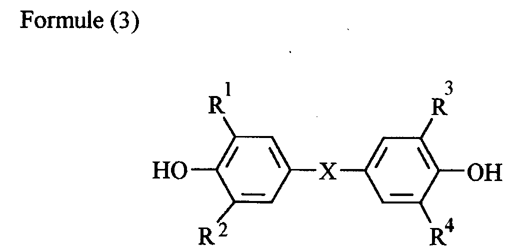 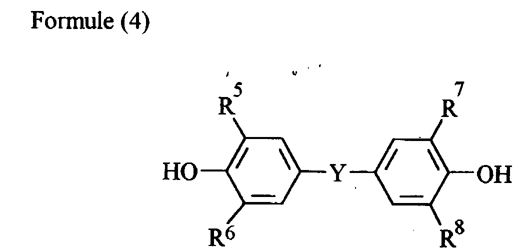 dans lesquelles chacun des R¹ à R⁸ représente l'atome d'hydrogène, un atome d'halogène ou un groupe alkyle contenant 1 à 4 atomes de carbone, X représente un groupe alkylidène à chaîne linéaire, ramifiée ou cyclique contenant 1 à 10 atomes de carbone, un groupe alkylidène substitué par aryle, un groupe arylène ou un groupe sulfonyle et Y représente l'atome d'oxygène ou l'atome de soufre, et
la dissolution du produit ainsi obtenu dans ledit solvant non halogéné,
caractérisé en ce que le rapport molaire de la quantité de phénol dihydroxylé de formule (3) à celle de phénol dihydroxylé de formule (4) est situé entre 35/65 et 65/35.
